# EUROPÄISCHE PATENTANMELDUNG

(11) **EP 1 199 619 A2**
(43) Veröffentlichungstag der Anmeldung: **24.04.2002**
(21) Anmeldenummer: 01124417.5
(22) Anmeldetag: 11.10.2001
(51) Int. Cl.: G05B 19/4062

(54) **Antriebssystem für rollbare Abdeckeinrichtungen von Kraftfahrzeugen**

(30) Priorität: 20.10.2000 DE 10052042
(71) Anmelder: BOS GmbH & Co. KG, 73760 Ostfildern (DE)
(72) Erfinder: Schlecht, Werner P., 71665 Vaihingen/Enz (DE); Seel, Holger, 71134 Aidlingen (DE); Laudenbach, Thomas, 72108 Rottenburg (DE)
(74) Vertreter: Patentanwälte Rüger, Barthelt & Abel

(57) **Zusammenfassung**

Ein Antriebssystem für roll- oder faltbare Abdeckeinrichtungen (5) von Kraftfahrzeugen ist mit einer Steuerung (31) ausgerüstet. Die Steuerung (31) weist einen Stromsensor (42) auf um den Strom zu erfassen, der von dem Antriebssystem bei der Bewegung der Abdeckeinrichtung (5) aufgenommen wird. Das Steuersystem (31) misst einen Stromparameter zum Beginn der Bewegung der Abdeckeinrichtung (5) und schaltet deren Bewegung ab, sobald ein Abschaltkriterium erreicht ist, das aus den Stromwerten abgeleitet ist, die zum Beginn der Bewegung gemessen wurde.

## Beschreibung

In Kraftfahrzeugen gibt es eine Reihe von aufrollbaren oder faltbaren Abdeckeinrichtungen, die mit einem Elektromotor angetrieben werden. Beispiele hierfür sind Heckscheibenrollos, wie sie in der 44 12 557 beschrieben sind. Vielen dieser Abdeckeinrichtungen ist gemeinsam, dass zu ihnen eine Wickelwelle gehört, an dem mit einer Kante eine Aufrollbare Bahn beispielsweise an der Rollobahn oder einem Trenngitter befestigt ist. Mit Hilfe eines Federmotors wird die Wickelwelle im Aufwickelsinne der betreffenden Bahn vorgespannt, während sie gegen die Wirkung der als Feder-motor dienenden Feder von der Wickelwelle mit Hilfe eines Elektromotors abgezogen werden.

Bei dem oben erwähnten Heckscheiberollo sind hierzu zwei Schwenkhebel vorgesehen, die neben der Wickelwelle um eine zu der Achse der Wickelwelle senkrechte Achse drehbar gelagert sind. Mit Hilfe von zwei Kuppelstangen, werden die Schwenkhebel bewegt. Die Kuppelstangen sind einends an den Schwenkhebeln über ein Scharnier angelenkt und anderenends an zwei Kurbelzapfen, die mit der Ausgangswelle eines Getriebemotors drehfest verbunden sind.

Die kinematische Umkehrung ist ebenfalls bekannt, bei der Schwenkhebel über Federn im Sinne des Abwickelns der Bahnen vorgespannt sind, während die Wickelwelle selbst mit dem Elektromotor angetrieben ist.

Eine andere Variante sind faltbare Abdeckeinrichtungen, bei denen ein Spriegel angetrieben ist. In der Regel derjenige Spriegel, der beim Ein- und Ausfahren den größten Weg zurücklegt.

Zur Steuerung dieses Heckscheibenrollos und vergleichbaren Abdeckeinrichtungen, wird in der Regel ein Zeitglied verwendet, dass bei der Betätigung für eine vorbestimmte Zeit den Motor in Gang setzt. Dadurch soll der Fahrer entlastet werden, indem durch kurzzeitige Betätigung des entsprechenden Richtungsschalters das Rollo, entweder vollständig ein- oder vollständig ausfährt, ohne dass der Fahrer gezwungen ist, entweder entsprechend lange den Knopf zu betätigen oder nicht vergessen darf, den Schalter wieder in die Ausstellung zu bringen.

Damit diese Art der Steuerung arbeiten kann, muss der mechanische Antrieb der Abdeckeinrichtung ausreichend robust sein, um das maximale Drehmoment, das der Motor bei Blockierung abgeben kann, zerstörungsfrei zu überdauern.

In der Regel sind deswegen die mechanischen Teile des Antriebssystems verhältnismäßig stark überdimensioniert, und zwar insbesondere hinsichtlich jener Bewegung, bei der Druckkräfte auftreten, die zum Verbiegen der entsprechenden Stangen führen können. Zugkräfte sind im allgemeinen weniger kritisch.

Ein weiterer Schwachpunkt sind Kurbelzapfen, die im Blockierfall nicht abbrechen dürfen.

Ausgehend hiervon ist es Aufgabe der Erfindung ein komfortableres Antriebssystem zu schaffen, dass in der Lage ist, den Elektromotor abzuschalten, noch bevor große Kräfte auftreten können.

Diese Aufgabe wird erfindungsgemäß mit dem Antriebssystem mit dem Merkmal des Anspruches 1 gelöst.

Mit Hilfe eines Stromsensors wird der Strom gemessen, den der Motor aufnimmt. Dieser Strom ist im weitesten Sinne proportional zu dem vom Motor abgegebenen Drehmoment und somit proportional zu der Kraft, die im Gestänge auftritt unter Berücksichtigung der jeweiligen Hebelverhältnisse. Allerdings tritt im zeitlichen Verlauf des Stroms mindestens ein zusätzliches Maximum auf, das durch das sogenannte Losbrechmoment verursacht wird. Es ist deswegen nicht möglich einen Grenzwert zu definieren, bei dessen Überschreiten der Motor stillgesetzt wird. Wegen dieses zusätzlichen Maximums kann es sein, dass die Abschaltung des Motors erfolgen würde, ehe der gewünschte Endzustand erreicht ist.

Das erfindungsgemäße Antriebssystem enthält deswegen eine Steuereinrichtung, die so gestaltet ist, dass sie zumindest einen Stromparameter misst, wenn der Elektromotor zum Verlassen der wenigstens einen Endlage mit Strom versorgt wird. Dieser so gemessene Wert des Stromparameters wird als Referenzwert gespeichert. Mit dem Referenzwert werden die späteren Werte des Stromparameters verglichen, um sodann in Abhängigkeit von der mathematischen Beziehung zwischen dem aktuellen Wert des Stromparameters und dem Referenzwert den Strom für den Elektromotor abzuschalten.

Diese Vorgehensweise gestattet es dem Antriebssystem zu lernen, wodurch es auch dann nicht irre geführt wird, wenn das Antriebssystem temperaturabhängig eine mehr oder weniger starke Schwergängigkeit aufweist. Außerdem können auf diese Weise Drehmomentänderung, die während der Betätigung auftreten entsprechend berücksichtigt werden um Fehlsteuerungen zu vermeiden. Insbesondere können je nach Hebelverhältnissen und eventuellen Entlastungsmaßnahmen durch Hilfsfedern zusätzliche Stromspitzen auftreten, die zwischen dem Losbrechmoment und der betreffenden Endlage auftreten. Fehlsteuerungen hierdurch werden ausgeschlossen.

In der erfindungsgemäßen Weise können beispielsweise Fensterrollos, Abdeckeinrichtungen einer Laderaumabdeckung oder Trenngitter gesteuert werden. Letztere dienen dazu, den Laderaum vom Fahrgastraum eines Kraftfahrzeugs abzutrennen.

Unter Stromparameter sollen im Sinne der Erfindung am Stromverlauf zu messenden physikalischen Größen verstanden werden, die sich als Abschaltkriterium eigenen. Hierzu gehört beispielsweise die Größe des jeweils fließenden Stroms oder auch der zeitliche Verlauf des Stroms, bzw. die Stromanstiegsgeschwindigkeit. So kann nach dem Starten des Antriebssystems, d.h. dem Einschalten des Stroms für den Elektromotor, beispielsweise der erste Stromscheitelwert gemessen werden. Dieser Wert wird gegebenenfalls mit einem Korrekturwert versehen und bildet den Referenzwert. Sobald dieser Referenzwert ein zweites Mal überstiegen wird, wird von der Steuerung der Strom für den Elektromotor abschaltet. Dabei können unter Umständen unterschiedliche Referenzwerte verwendet werden, je nachdem in welcher Richtung das Antriebssystem jeweils in Gang gesetzt wird, d.h. jeder Bewegungsrichtung ist ein Referenzwert zugeordnet. Dieser Referenzwert kann über eine einmalige Verwendung hinaus gespeichert und mit vorausgegangenen Referenzwerten zur Bildung eines gemittelten Referenzwertes zusammengefasst werden, wobei dieser gemittelte Wert dann den tatsächlichen Referenzwert bildet, mit dem der Vergleich durchgeführt wird.

Dieses System setzt voraus, dass im Verlauf vor dem Erreichen der Endlage kein zweites Mal der Strom einen Wert erreicht, der über dem ersten Scheitelwert nach dem Einschalten des Motorstroms liegt.

Eine andere Möglichkeit für das Abschaltkriterium ist die oben bereits erwähnte Stromanstiegsgeschwindigkeit. Dabei wird von dem Umstand Gebrauch gemacht, dass nach dem unmittelbaren Einschalten des Motorstroms und dem Losbrechen des Antriebs in einem vorgegebenen Zeitintervall das nur von der Konstruktion abhängig und von Exemplarstreuungen weitgehend unabhängig ist, ein gemittelter Stromabstieg auftritt, der sanfter ist als der Stromanstieg der beobachtet wird, wenn die jeweilige Rollobahn vollständig ausgefahren ist und der Antrieb gegen den Endanschlag läuft. Der beim Losbrechen in dem Zeitfenster gemessene Stromanstieg als Differenzenquotient wird als Referenzwert verwendet und es wird überprüft, ob beispielsweise in einem kleineren Zeitfenster, das während des Betriebs des Elektromotors mitgezogen wird, ein Stromanstieg auftritt, der steiler ist als der Referenzwert. Wenn dies der Fall ist, schaltet die Steuerung den Strom für den Elektromotor ab.

Elektromotoren erzeugen kurzzeitige periodische Strompeaks, die durch den Kommutator hervorgerufen werden. Der zeitliche Abstand der Stromnadelimpulse ist der Drehzahl umgekehrt proportional und kann unter Umständen zu Erfassungsfehlern führen, da die Steuerung den Strom sampelt. Solche Erfassungsfehler lassen sich vermeiden, wenn eine Filterung des gemessenen Signals vorgenommen wird. Diese Filterung kann in dem Mikroprozessor der Steuerung selbst vorgenommen werden, oder indem zwischen den Stromsensor und dem betreffenden Eingang der Steuerung ein Tiefpass geschaltet ist, der die Stromnadelimpulse unterdrückt. Die Grenzfrequenz des Tiefpass muss so gewählt werden, dass keine unnötige Verzögerung entsteht, die zu Fehlsteuerungen Anlass geben könnte.

Ein Tiefpassfilter ist nicht nur dann von Vorteil, wenn der Stromwert als solcher gemessen wird, sondern auch für die Messung der Stromanstiegsgeschwindigkeit. Die überlagerten Nadelimpulse könnten unter Umständen eine größere Steilheit des Stromanstiegs simulieren.

Umgekehrt können sie auch bei entgegengesetzter Phasenlage eine Verminderung der Stromanstiegsgeschwindigkeit simulieren. Hierzu braucht man sich nur vorzustellen, dass der erste Messwert zu einem Zeitpunkt genommen wird, wenn der Stromnadelimpuls auftritt, während der zweite Messwert in ein Tal zwischen zwei Stromnadelimpulse fällt.

Das Zeitfenster zur Ermittlung der Stromanstiegsgeschwindigkeit, beginnt zweckmäßiger Weise unmittelbar mit dem Einschalten des Motorstroms bzw. einem ankommenden Befehl den Motorstrom einzuschalten.

Die erfindungemäße Steuerung kann sowohl von Hand ausgelöst werden, als auch in Verbindung mit automatischen Systemen verwendet werden, die abhängig von sonstigen Umweltbedingungen, das Ein- oder Ausfahren der Abdeckeinrichtung auslösen.

Der gemessene Referenzwert kann wie bereits erwähnt mit einem Korrekturwert versehen werden. Dieser Korrekturwert kann ein fester Korrekturwert sein, der sich aufgrund der Erfahrung mit der Konstruktion der jeweiligen Abdeckeinrichtung ergibt, oder es kann ein Korrekturwert sein, der während des Betriebs der Abdeckeinrichtung gewonnen wird. Beispiele für derartige Korrekturwerte sind die Temperatur, die mit Hilfe eines entsprechenden Sensors gemessen werden kann, oder aber auch die Ermittlung der Schwer- oder Leichtgängigkeit, indem in einem bestimmten Zeitfenster die elektrische Arbeit gemessen wird. Die zu erbringende Arbeit ist bei zeitlich festliegenden Zeitfenstern offenbar davon abhängig, ob das System schwergängig ist und ein großes Drehmoment erfordert, oder wegen erhöhter Temperatur relativ leichtgängig ist und folglich in diesem Zeitfenster eine geringere elektrische Arbeit leisten muss.

Als Vorsichtsmaßnahme kann in der Steuerung ein Zeitschlitz realisiert werden, innerhalb dessen das Abschalten des Motorstroms erfolgen muss. Dabei kann der eine Rand des Zeitschlitzes der zeitlich gesehen, dem Einschalten benachbart ist, festlegen, wann frühestens die Abschaltung erfolgt, während der andere Rand definiert, wann spätestens die Abschaltung zu erfolgen hat.

Im übrigen sind Weiterbildungen der Erfindungen Gegenstand von Unteransprüchen. Dabei sollen ausdrücklich auch solche Kombinationen mit beansprucht sein, für die es kein ausdrückliches Ausführungsbeispiel gibt.

In der Zeichnung ist ein Ausführungsbeispiel des Gegenstandes der Erfindung dargestellt. Es zeigen:
- Fig. 1: ein Heckscheibenrollo eines Kraftfahrzeugs als Beispiel für ein Abdecksystem,

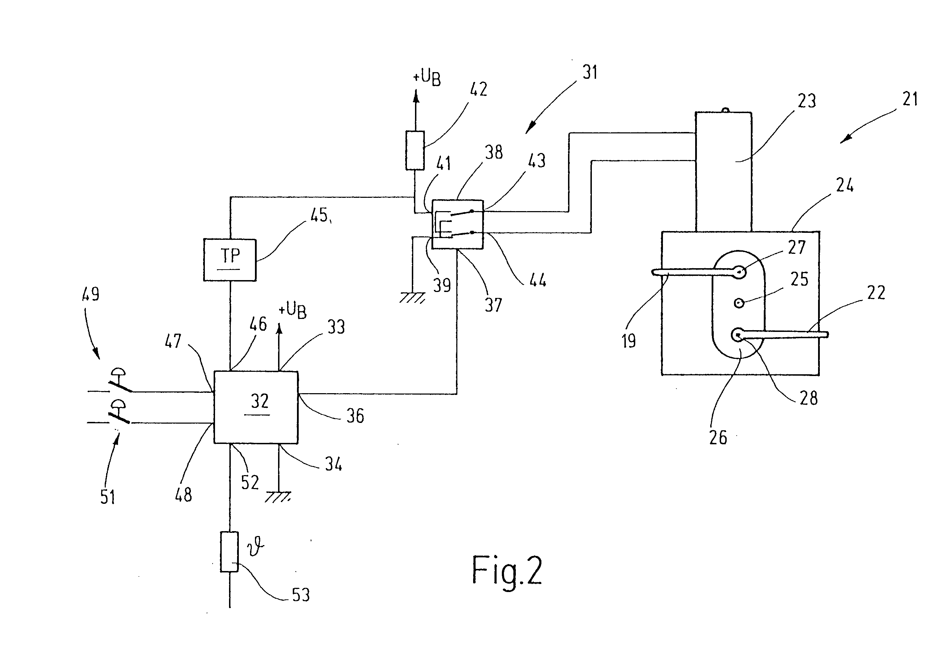

- Fig. 2: das Blockschaltbild für das Antriebssystem des Heckscheibenrollos nach Fig.1,
- Fig. 3: stark schematisiert den Verlauf des Motorstroms, bei dem Heckscheibenrollo nach Fig. 1,
- Fig. 4: ein stark vereinfachtes Flussdiagramm für die Steuerung des Antriebssystems nach Fig. 2, unter Verwendung des Stromwertes,
- Fig. 5: ein stark vereinfachtes Flussdiagramm für die Steuerung des Antriebssystems nach Fig. 2, unter Verwendung der Stromanstiegsgeschwindigkeit,
- Fig. 6: ein Trenngitter als Beispiel für ein Abdecksystem, in einer perspektivischen Darstellung,
- Fig. 7: eine faltbare Laderaumabdeckung als Beispiel für ein Abdecksystem, in einer perspektivischen Darstellung, und
- Fig. 8: das Antriebssystem der Laderaumabdeckung nach Fig.7.

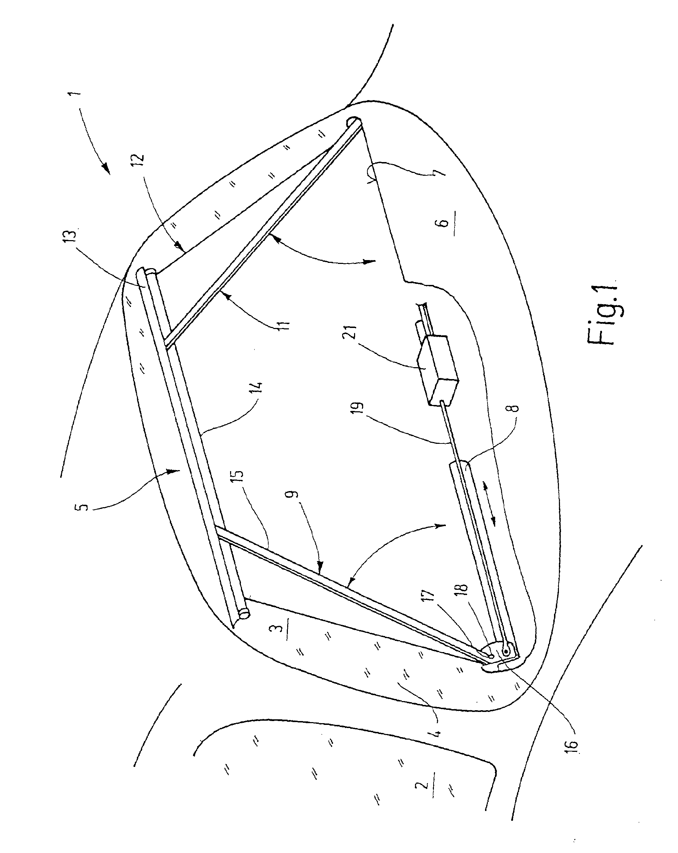

Fig. 1 zeigt in stark schematisierter Weise die Heckpartie eines Kraftfahrzeuges 1 in einer Ansicht von hinten. In der perspektivischen Darstellung ist ein linkes hinteres Seitenfenster 2, sowie ein Heckfenster 3 mit der eingesetzten, üblicherweise gekrümmten Fensterscheibe 4 zu erkennen.

Vor der Innenseite der Fensterscheibe 4 befindet sich ein Fensterrollo 5, das im ausgefahrenen Zustand gezeigt ist. Das Fensterrollo 5 ist ein Beispiel für eine Abdeckeinrichtung eines Kraftfahrzeuges, die zwischen einer ersten und einer zweiten Endlage hin und her bewegbar ist. Weitere Beispiele für Abdeckeinrichtungen sind Trenngitter oder Laderaumabdeckungen, die ebenfalls mit dem erfindungemäßen Antriebssystem ausgestattet sein können.

Außerdem ist in Figur 1 eine aufgebrochen veranschaulichter Hutablage 6 zu erkennen, in der ein über die Breite der Hutablage 6 sich erstreckender Auslaufschlitz 7 enthalten ist.

Zu dem Fensterrollo 5 gehören eine Wickelwelle 8, zwei Aufspannhebel 9 und 11, eine Rollobahn 12 sowie eine Zugstange 13. Die Wickelwelle 3, die abschnittsweise in dem aufgebrochenen Teil der Hutablage 6 zu erkennen ist, ist unterhalb der Hutablage 6 mittels nicht weiter gezeigten Lagereinrichtungen drehbar gelagert. Im Inneren der Wickelwelle 8 befindet sich ein Federmotor, der die Wickelwelle 8 ständig im Sinne eines Aufwickelns der Rollobahn 12 vorspannt. Die Wickelwelle 8 liegt horizontal etwa unterhalb des geraden Auslaufschlitzes 7 und ist zu diesem parallel.

Die Rollobahn 12, besteht aus einer glatten gelochten Kunststofffolie, die mit einer Kante an der Wickelwelle 8 befestigt ist und mit ihrer anderen dazu parallelen Kante 14 an dem Zugstab 13.

Die beiden Aufspannhebel 9 und 11 sind zueinander spiegelbildlich, so dass die Beschreibung für den Aufspannhebel 9 in sinngemäßer Weise auch für den Aufspannhebel 11 gilt. Der Aufspannhebel 9 ist ein zweiarmiger Hebel mit einem Hebelabschnitt 15 sowie einem Hebelabschnitt 16.

An der Übergangsstelle zwischen den beiden Hebelabschnitten 15 und 16 befindet sich eine Lagerbohrung 17, mit deren Hilfe der Aufspannhebel 9 auf einem Lagerzapfen 18 schwenkbar gelagert ist. Der Lagerzapfen 18 ist an der Unterseite des weggebrochenen Teils der Hutablage 6 neben dem Auslaufschlitz 7 befestigt. Die Ausrichtung des Lagerzapfens 18 ist so gestaltet, dass sich der Hebelabschnitt 15 in einer Ebene bewegt, die etwa parallel zu der durch die Fensterscheibe 4 definierten Ebene liegt. Der Aufspannhebel 9 kann aus einer Lage, in der der Hebelabschnitt 15 etwa parallel zu der Wickelwelle 8 verläuft, in eine Stellung überführt werden, in der er etwa parallel zu den seitlichen Begrenzungsrändern des Heckfensters 3 ausgerichtet ist.

Um den Aufspannhebel 9 zwischen diesen beiden Endlagen hin und her zu bewegen, ist der untere Hebelabschnitt 16 über eine Betätigungsstange 19 mit einem Antriebsmotor 21 verbunden. Die Betätigungsstange 19 liegt etwa parallel zu der Wickelwelle 8 und befindet sich ebenfalls unterhalb der Hutablage 6, zusammen mit der Antriebseinrichtung 21. Der Aufspannhebel 11 ist spiegelbildlich ausgeführt und wird über eine entsprechende Betätigungsstange 22 gegenläufig bewegt.

Das Antriebssystem weist einen permanenterregten Gleichstrommotor 23 sowie ein Zahnradgetriebe 24 auf, auf dessen Aufgangswelle 25 drehfest eine Scheibe 26 sitzt, die zwei Kurbelzapfen 27 und 28 trägt. An diesem Kurbelzapfen 27 und 28 sind die beiden Betätigungsstangen 19 und 22 angelenkt.

Ferner gehört zu dem Antriebssystem 21 eine Steuereinrichtung 31, die als wesentlichen Bestandteil einen Mikroprozessor 32 aufweist, der einen internen Programm- und Datenspeicher enthält. Ein Stromversorgungseingang 33 des Mikroprozessors 32 ist mit dem Fahrzeugstromnetz verbunden, während ein zweiter Eingang 34 an einer Fahrzeugmasse 35 liegt.

Ein gesteuerter Ausgang 36 ist mit einem Steuereingang 37 eines Polwendeschalters 38 verbunden. Der Polwendeschalter 38 weist zwei Eingänge 39 und 41 auf, von denen der eine an der Fahrzeugmasse liegt, während der andere Eingang 41 über einen als Stromsensor dienenden Widerstand 42 mit der positiven Versorgungsspannung verbunden ist, an der auch der Stromversorgungseingang 33 des Mikroprozessors 32 liegt.

Der Polwendeschalter 38 ist mit zwei Ausgängen 43 und 44 versehen, die über entsprechende Leitungen mit den Stromversorgungseingängen des permanenterregten Gleichstrommotors 23 verbunden sind.

Der Polwendeschalter 38 weist eine Mittelstellung auf, in der die Stromversorgung zu dem Motor 23 unterbrochen ist. In jeder der beiden anderen Endlagen ist der Motor 23 mit der entsprechenden Polarität mit dem Bordnetz verbunden, und zwar einends über den Stromsensorwidertand 42.

Mit dem Eingang 41 des Polwendeschalters 38 ist ein Eingang eines Tiefpasses 45 verbunden, der ausgangsseitig an einem als Analogdigitalwandler ausgebildeten Messeingang 46 des Mikroprozessors 32 liegt. Zwei weitere Eingänge 47 und 48 sind mit Handtastern 49 und 51 verbunden. Schließlich kann noch ein Eingang 52 mit einem Temperaturfühler 53 geschaltet sein.

Die gezeigte Anordnung arbeitet wie folgt:

Durch Betätigen beispielsweise des Tasters 49 durch den Fahrer erhält der Mikroprozessor 32 an seinem Eingang 47 ein entsprechendes Signal, das er dahingehend interpretiert, dass der Motor 23 im Sinne eines Ausfahrens des Heckfensterrollos 5 in Gang setzen soll. Der Mikroprozessor 32 gibt daraufhin an seinem Steuerausgang 36 ein entsprechendes Steuersignal an den Polwendeschalter 38, der daraufhin in eine der beiden Endlagen umschaltet, und zwar in diejenige, in der der Gleichstrommotor 23 mit der erforderlichen Polarität Strom aus dem Bordnetz erhält. Der Strom fließt über den Sensorwiderstand 42 und erzeugt einen stromportionalen Spannungsabfall.

Die Spannung, die auf der "Ausgangsseite" des Stromsensorwiderstands 42 abfällt, wird über den Tiefpass 45 gefiltert und dem Signaleingang 46 zugeführt. Dort erfolgt eine Digitalisierung des Analogwertes. Außerdem wird intern in dem Mikroprozessor 32 die Versorgungsspannung an dem Stromversorgungseingang 33 gemessen, ebenfalls digitalisiert und mit der Spannung an dem Ausgang des Tiefpasses 45 verglichen. Die so ermittelte Spannungsdifferenz ist ein Maß für den Spannungsabfall an dem Stromsensorwiderstand 42 und somit einem Maß für den fließenden Strom, da der Wert des Stromsensorwiderstands 42 bekannt und in dem Programm des Mikroprozessors 32 entsprechend berücksichtigt ist.

Sobald das Heckfensterrollo 5 vollständig ausgefahren ist, steigt der Strom durch den Stromsensorwiderstand 42 stark an, was der Mikroprozessor 32 über den Eingang 46 feststellt, um daraufhin das Steuersignal an dem Ausgang 36 abzuschalten. Der Polwendeschalter 38 kehrt daraufhin in die Neutralstellung zurück. In der Neutralstellung ist die Stromverbindung zwischen dem Motor 23 und dem Bordnetz unterbrochen.

Der Mikroprozessor 32 sorgt dafür, dass unabhängig von der Dauer der Betätigung des Tasters 49, das Heckfensterrollo vollständig ausgefahren wird. Er sorgt auch für ein Abschalten der Stromversorgung für den Motor 23 sollte der Fahrer die Taste 49 länger als unbedingt notwendig betätigen.

Zum Einfahren des Heckfensterrollos 5 drückt der Benutzer den Taster 51, woraufhin in dem Mikroprozessor 32 praktisch dasselbe Programm abläuft, mit der einzigen Einschränkung, dass das Steuersignal an dem Ausgang 36 den Polwendeschalter 38 in die andere Schaltstellung bringt, in der der Motor 23 mit einer Polarität am Bordnetz liegt, die gegenüber dem Ausfahren umgekehrt ist.

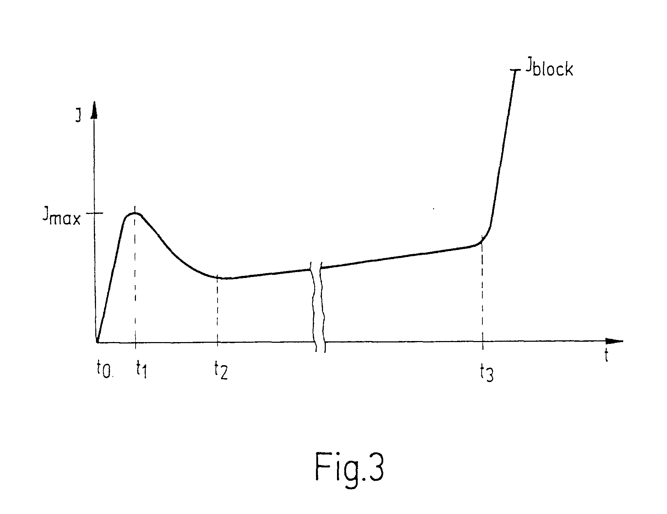

In Figur 3 ist der prinzipielle zeitabhängige Stromverlauf zu erkennen, wie er auftritt, wenn das Heckfensterrollo 5 aus einer Endlage in die andere Endlage gebracht wird.

Der Graph zeigt den Strom durch den Sensorwiderstand 42. Zu einem Zeitpunkt t₀ wird der Strom für den Motor 23 erstmalig eingeschaltet. Zu einem Zeitpunkt T₁ tritt das erste Strommaximum Iₘₐₓ auf. Dieses Strommaximum wird durch das Losbrechmoment hervorgerufen, dass auftritt, um die Mechanik des Heckfensterrollos 5 erstmalig in Gang zu setzen.

Sobald zum Zeitpunkt der t₁ die Mechanik in Bewegung ist, verlässt der Strom seinen Maximalwert Iₘₐₓ und fällt einen kleineren Wert, beispielsweise bis zum Zeitpunkt t₂.

Je nach den Hebelverhältnissen und sonstigen Widerstandsmomenten steigt der Motorstrom ausgehend von dem Zeitpunkt t₂ gegebenenfalls langsam monoton an, bis etwa beim Zeitpunkt t₃ eine mechanische Endlage erreicht wird, in der das weitere Drehen des Motors blockiert wird. Ab dem Zeitpunkt t₃ wird deswegen der Motorstrom verhältnismäßig sehr steil auf einen maximalen Blockierwert I_{Block} steigen.

Der Blockierstrom I_{Block} ist jener Strom der entsteht, wenn der Anker des Motors 23 festgehalten wird. In diesem Zustand erzeugt gleichzeitig der Motor 23 sein größtes Drehmoment, das unter Umständen zu groß ist, als dass es die mechanischen Teile auf Dauer bzw. bei wiederholter Belastung ohne Beschädigung aushalten könnten. Die Steuerung 31 sorgt deswegen dafür, beim Erreichen der Endlage den Strom für den Motor 23 abzuschalten, noch bevor der Blockierstrom I_{Block} erreicht wird, beispielsweise erfolgt die Abschaltung, wenn der Strom auf einen Wert ansteigt, der knapp über dem Scheitelstrom Iₘₐₓ als Losbrechstrom liegt.

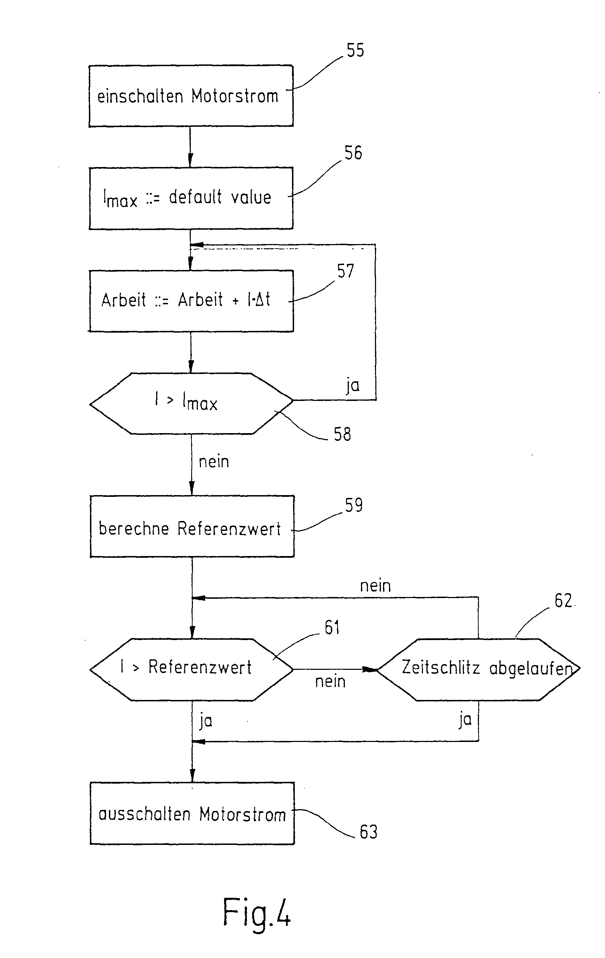

Figur 4 zeigt in stark schematisierter Form das Flussdiagramm des Programms für den Mikroprozessor 32.

Mit dem Betätigen einer der beiden Tasten 49 oder 51 wird in einem Anweisungsblock 55 der Strom für den Elektromotor 23 eingeschaltet, indem für den Ausgang 36 ein entsprechendes Signal an den Polwendeschalter 38 geliefert wird. Sodann wird in einem Anweisungsblock 56 die Programmvariable Iₘₐₓ auf einen Grundwert eingestellt.

Ein nachfolgender Anweisungsblock 57 dient dazu, das Integral über den Strom zu messen, indem eine Speichevariable "Arbeit", die zu Beginn des Programmstücks zurückgesetzt wurde, jeweils um den gemessenen Stromwert multipliziert mit Δt bei jedem Durchlauf erhöht wird. Δt entspricht dabei der Zeit, die der Schleifendurchlauf benötigt, bis der Anweisungsblock 57 wieder angesprungen wird.

Nach dem Verlassen des Anweisungsblocks 57 erfolgt in einem Abfrageblock 58 die Abprüfung des aktuell gemessenen Stromes daraufhin, ob der gemessene Strom größer als der zuvor gemessene Strom ist. Bei diesem Programmausschnitt, wird davon ausgegangen, dass der default value Null ist, so dass bereits beim ersten Schleifendurchlauf die Bedingung erfüllt ist, damit das Programm im Anschluss an den Abfragblock 58 zu dem Eingang des Anweisungsblocks 57 hin verzweigt.

Diese kleine Programmschleife wird solange durchlaufen, bis nach dem Losbrechen der mechanischen Teile der Strom anfängt zu sinken, womit die Bedingung nicht mehr erfüllt ist, gemäß der der aktuelle gemessene Strom größer als der zuvor abgespeicherte Maximalwert Iₘₐₓ ist.

Wenn diese Bedingung nicht mehr erreicht wird, beginnt der Motorstrom zu sinken, und das Programm verzweigt nach dem Abfrageblock 58 zu einem Anweisungsblock 59, in dem der Referenzwert berechnet wird. Die Berechnung des Referenzwertes geschieht basierend auf den Wert der Programmvariablen Iₘₐₓ, beispielsweise unter Berücksichtigung der geleisteten Arbeit in Gestalt des Integrals über den Stromverlauf bis zum erreichen dieses Scheitelwertes oder beispielsweise der Temperatur oder vorangegangener Berechnungen des Referenzwertes aus vorhergehenden Programmläufen.

Nachdem der Referenzwert in dem Anweisungsblock 59 berechnet wurde, wird in einem Abfrageblock 61 überprüft, ob der aktuelle Strom, der jeweils gemessen wird, den Referenzwert übersteigt oder nicht. Solange der Strom kleiner ist, als der Referenzwert gelangt das Programm zu einem Abfrageblock 62, in dem ein Zeitschlitz realisiert wird.

Mit Hilfe des Zeitschlitzes wird sichergestellt, dass in jedem Falle nach einer bestimmten Zeit seit dem Einschalten des Motorstroms in dem Anweisungsblock 55 der Motorstrom abgeschaltet wird. Bei fehlerfreiem Lauf, wird diese Bedingung nicht erfüllt, weshalb das Programm nach der Abprüfung in dem Abfrageblock 62 zu dem Eingang des Abfrageblocks 61 zurückkehrt. Diese kurze Programmschleife aus den beiden Abfrageblöcken 61 und 62 wird solange durchlaufen, bis entweder der Zeitschlitz abgelaufen ist oder, weil das Antriebssystem gegen eine mechanische Blockade anläuft, der aktuelle Motorstrom größer wird als der Referenzwert. Das Programm fährt sodann mit einem Anweisungsblock 63 weiter, indem der Mikroprozessor 32 dafür sorgt, dass der Polwendeschalter 38 in seine Neutralstellung zurückkehrt.

Das oben erläuterte Flussdiagramm ist insofern stark vereinfacht als Feinheiten wie die jeweils gewünschte Richtung, Registernormierungen, sinnvolle Warteschleifen und/oder der Wechsel in andere Unterprogramme nicht berücksichtigt sind, um den erfindungswesentlichen Teil besser erkennen zu können.

Das Erfassen des Stromintegrals bis zum Erreichen des Strommaximums beim Anlauf kann als Maß dafür verstanden werden, wie schwer- oder leichtgängig das System ist. Dadurch ist es möglich, bei schwergängigen Systemen die Abschaltgrenze weiter nach oben zu schieben, um die ausreichende Vorspannung in dem mechanischen System beim erreichen der Endlage zu gewährleisten. Die Vorspannung ist wichtig, damit es nicht zu irgendwelchen Klappergeräuschen oder Schwingungen kommen kann, wenn Erschütterungen die vorhandene Vorspannkraft überwinden.

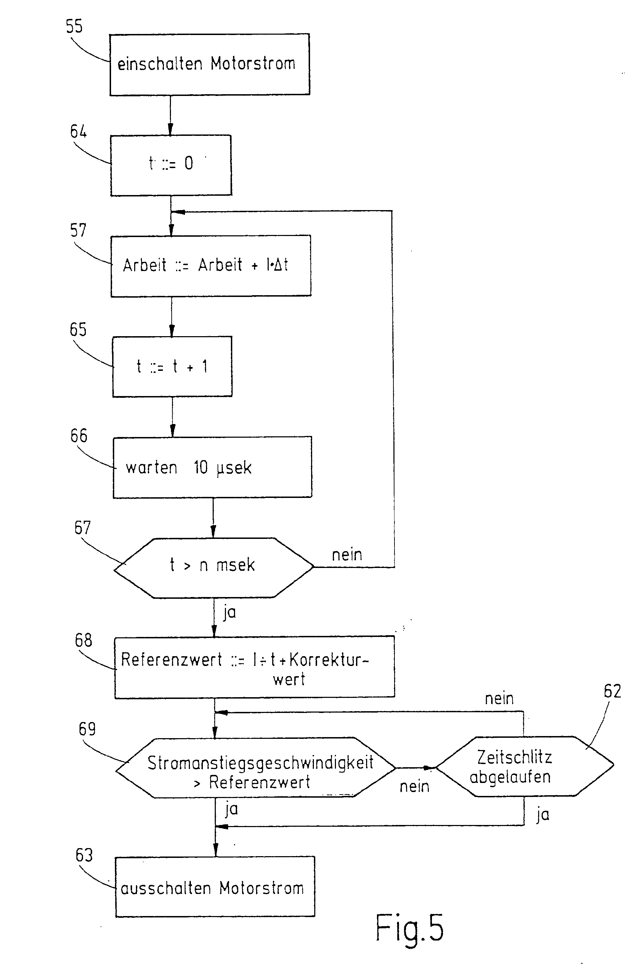

Figur 5 zeigt ein Flussdiagramm, das dem Flussdiagramm nach Figur 4 ähnlich ist, mit der Einschränkung, dass als Referenzwert anstelle des Stromscheitelwertes die Stromanstiegsgeschwindigkeit ausgewertet wird.

Nach dem Betätigen einer der beiden Tasten 49 oder 51 wird wiederum in dem Anweisungsblock 55 der Motorstrom mit der jeweils erforderlichen Polarität entsprechend der gewünschten Drehrichtung eingeschaltet. In einem Anweisungsblock 64 wird eine Programmvariable t, die zur Zeitmessung dient, auf Null zurückgesetzt. In dem Anweisungsblock 57 wird wiederum wie zuvor das Stromintegral gebildet, und anschließend wird in einem Anweisungsblock 65 die Speichervariable um eins erhöht.

Nach dem Erhöhen der Programmvariablen t wartet das Programm in einem Anweisungsblock 66 eine vorgegebene Zeitspanne, beispielsweise 10 µsek und fährt sodann zu einem Abfrageblock 67 fort, in dem überprüft wird, ob der Wert der Programmvariablen t einen Wert angenommen hat der eine Zeitdauer von mehr als n msek entspricht.

Wenn die Bedingung nicht erfüllt ist, kehrt das Programm an den Eingang des Anweisungsblocks 57 so oft zurück bis die Bedingung erfüllt ist. Bei erreichen der Bedingung in dem Abfrageblock 67 fährt das Programm mit einem Anweisungsblock 68 fort. In diesem Anweisungsblock 68 wird die Steilheit des Stromanstiegs gemessen als Quotient des momentanen Stroms dividiert durch die Zeit, die seit dem Verlassen des Anweisungsblocks 55 vergangen ist. Auf diese Weise wird eine Stromanstiegsgeschwindigkeit festgelegt, die über das betreffende Zeitintervall gemittelt ist. Die Stromanstiegsgeschwindigkeit kann noch mit einem Korrekturwert versehen werden, d.h. versteilert oder abgeflacht werden, je nachdem ob das System schwer- oder leichtgängig ist, bzw. es wird die Nachgiebigkeit des Systems im Bereich des mechanischen Anschlags mit berücksichtigt. Die Nachgiebigkeit ist eine konstruktive Größe, die im Programm als fester Wert berücksichtigt werden kann. Die so erhaltene Stromanstiegsgeschwindigkeit wird als Referenzwert abgelegt.

Nach dem Festlegen des Referenzwertes in dem Anweisungsblock 68 wird in einem Abfrageblock kontinuierlich die Überprüfung vorgenommen, ob die von nun an gemessene Stromanstiegsgeschwindigkeit den Referenzwert übersteigt. Es versteht sich, dass diese Stromanstiegsgeschwindigkeit über ein Zeitfenster gemessen wird, das in dem Programm gleitend mitgeführt wird.

Das Zeitfenster hat eine Länge, die kurz ist gegenüber der Anstiegszeit des Blockierstroms, sobald die Mechanik des Fensterrollos 5 gegen einen Anschlag fährt. Innerhalb dieses Zeitfensters wird die jeweilige Steilheit des Stromanstiegs ermittelt und mit dem Referenzwert verglichen.

Wie ein solches Zeitfenster zu programmieren ist, ist dem Fachmann geläufig und braucht deswegen hier nicht im einzelnen erläutert zu werden.

Je nachdem wie die Abprüfung in dem Abfrageblock 69 ausgeht, wird entweder über den bereits beschriebenen Abfrageblock 62 oder zu dem Anweisungsblock 63 fortgefahren.

Der Übersichtlichkeit halber ist die Steuerung so beschrieben, als seien zwei Alternativen, nämlich die Alternative gemäß Fig. 4 oder die Alternative gemäß Fig. 5 implementiert. Es versteht sich, dass beide Algorithmen in einem Programm gemeinsam realisiert sein können, d.h. die Abschaltung erfolgt abhängig von dem aktuellen Wert des Stroms oder der Stromanstiegsgeschwindigkeit, je nachdem welches Ereignis Priorität hat oder früher zur Erfüllung des Abbruchkriteriums führt.

Anstatt in dem Anweisungsblock 57 die verrichtete Arbeit zu messen, die innerhalb eines bestimmten Zeitintervalls, das auch fest sein kann, aufgebracht wird, um die Schwergängigkeit des Systems zu ermitteln, kann auch beispielsweise die von dem Thermofühler 53 gemessene Temperatur mit herangezogen werden.

Es ist auch denkbar den Korrekturwert empirisch zu ermitteln und einmal im Programm zu implementieren, so dass auf den Anweisungsblock 57 verzichtet wird. Im Grenzfall kann der Korrekturwert 0 betragen.

Da das Bordnetz eines Kraftfahrzeugs im allgemeinen stark mit Störsignalen belastet ist, ist es zweckmäßig, wenn zumindest der Stromsensor Widerstand 42 räumlich möglichst dicht an den Elektromotor 23 herangerückt wird.

Weitere mögliche Abänderungen der beschriebenen Programmverläufe bestehen darin, z.B. über die Anzahl der Benutzungen des Heckscheibenrollos 5 in dem Programm Buch zu führen. Hierzu kann es auch gehören, für jeden Lauf den jeweils verwendeten Referenzwert aufzuzeichnen und über die Menge der Referenzwerte einen gemittelten Referenzwert zu erzeugen.

Der Zeitschlitz in dem Abfrageblock 62 kann auch so geändert werden, dass er eine vorzeitige Abschaltung verhindert wird, falls aus irgendwelchen Gründen ein vorzeitiges Abschaltkriterium erfüllt wird. Außerdem können für den Referenzwert Schranken festgelegt werden, die weder nach unten noch nach oben überschritten werden, d.h. im Zweifelsfall wird der Referenzwert auf die untere oder die obere Schranke festgelegt, je nachdem ob bei der ersten Messung des Referenzwertes ein Wert zustandekommt, der über der oberen Schranke beziehungsweise unter der unteren Schranke liegt.

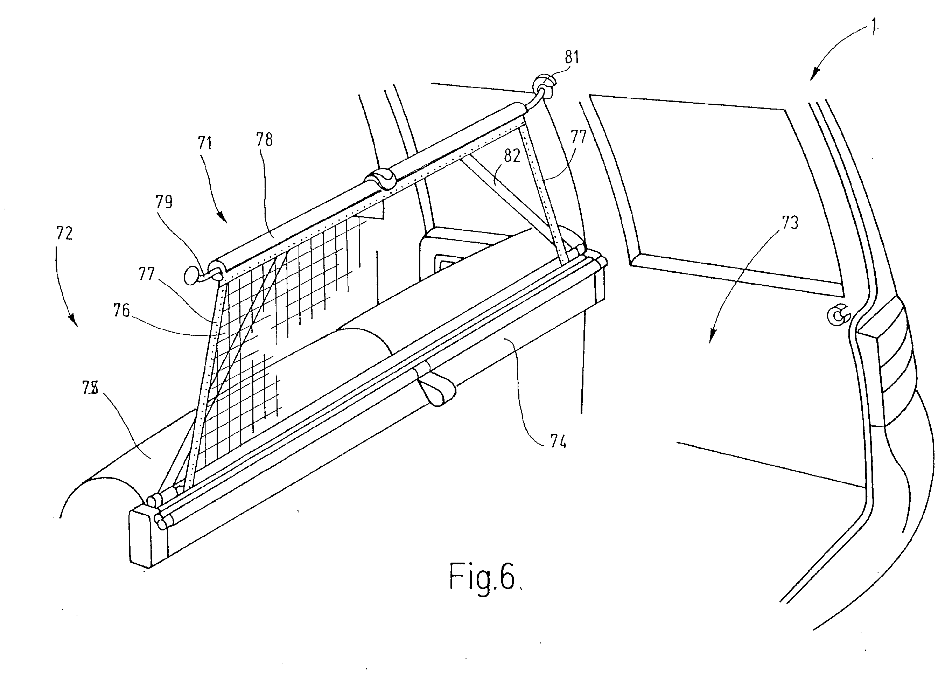

Fig. 6 zeigt ein anderes Ausführungsbeispiel für die Anwendung des erfindungsgemäßen Antriebssystems, und zwar in Gestalt eines Trenngitters 71, das zwischen einem Fahrgastraum 72 und einem Laderaum 73 des PKW 1 aufzuspannen ist.

Das Trenngitter 71 weist ein längliches Gehäuse 74 auf, das an der Rückseite einer Sitzlehne 75 eine Rücksitzbank befestigt ist und sich über die gesamte Fahrzeugbreite erstreckt. Im Inneren des Gehäuses 74 ist eine Wickelwelle drehbar gelagert, ähnlich der Wickelwelle 8 des Heckscheibenrollos 5. An dieser Wickelwelle ist ein gewirktes Gitternetz 76 befestigt. Das Gitternetz 76 besteht aus Kunststofffäden und hat einen etwa trapezförmigen Zuschnitt. Die seitlichen Ränder sind durch Einfassbänder 77 gesichert. An einer von der Wickelwelle bzw. dem Gehäuse 74 abliegenden Kante ist an dem Gitternetz 76 eine Zugstange 78 befestigt, die endseitig mit Einhängemitteln 79 versehen ist. Die Einhängemittel sind zum Einhängen in fahrzeugfeste Aufnahmetaschen 81 vorgesehen.

Um das Gitternetz 76 aufzuspannen, sind zwei schwenkbare Hebel 82 vorgesehen, die in ähnlicher Weise zu betätigen sind, wie die Schwenkhebel 9 und 11 des Heckscheibenrollos 5 nach Fig. 5. Eine detaillierte Beschreibung des Aufspannmechanismus erübrigt sich deswegen insoweit. Die Ansteuerung des zugehörigen Getriebemotors erfolgt wie zuvor beschrieben.

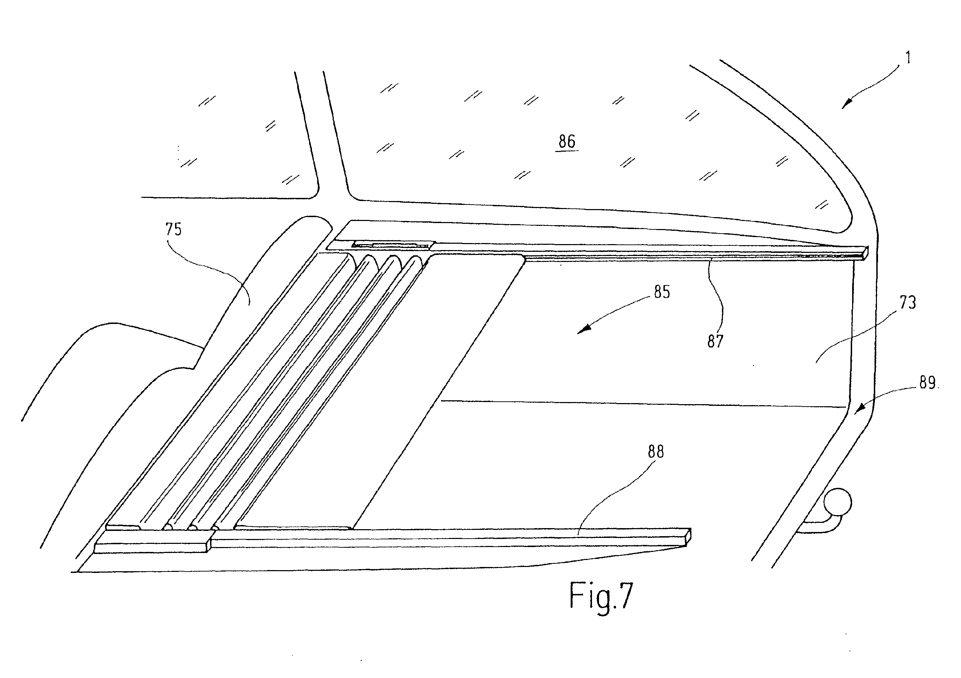

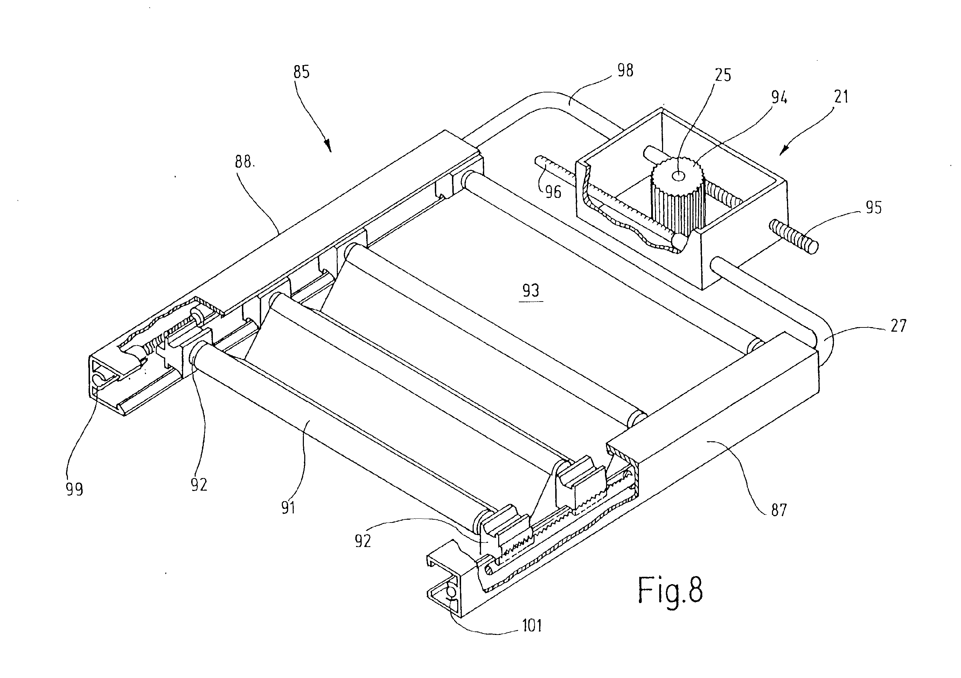

Ein drittes Anwendungsbeispiel ist in den Figuren 7 und 8 gezeigt. Hierbei handelt es sich um eine Laderaumabdeckung 85 für den Laderaum 73 des PKW 1.

Zu der Laderaumabdeckung 85 gehören zwei unterhalb von Seitenfenstern 86 angebrachte Führungsschienen 87 un 88, die sich von der Rückseite einer Rücksitzlehne 75 bis zur einer hinteren Heckklappenöffnung 98 gerade erstrecken. Zwischen den im Querschnitt C-förmigen Schienen 87 und 88 die parallel zueinander ausgerichtet sind, verlaufen mehrere in Fig. 8 erkennebare Spriegel 91, die endseitig mit Führungsstücken 92 in der C-förmigen Schiene 87 bzw. 88 geführt sind.

Mit Hilfe der Spriegel 91 wird eine Abdeckplane 93 unterstützt und gehalten, bzw. zwischen den beiden Führungsschienen 87 und 88 aufgespannt. Derjenige Spriegel 91 der mit der Vorderkante der Plane 93 verbunden ist, wird über den Getriebemotor 21 angetrieben. Der Getriebemotor 21 trägt auf seiner Ausgangswelle 25 ein Stirnzahnrad 94, dass mit zwei tangential an dem Zahnrad 94 vorbeilaufenden flexiblen Zahnstangen 95 und 96 kämmt.

Ausgehend von dem Gehäuse des Getriebemotors 21 laufen die Zahnstangen 95 und 96 durch Führungsrohre 97 und 98 in Führungsnuten 99 und 101 ein, die im Inneren der C-förmigen Führungsschienen 97 und 88 wie gezeigt angeordnet sind. In die Verzahnung der flexiblen Zahnstangen 95 und 96 greifen die Führungsblöcke 92 mit einer entsprechenden komplementären Verzahnung ein, die durch den Schlitz in der betreffenden Führungsnut 99 und 101 hindurch reicht.

Die Steuerung des Getriebemotors 21 geschieht in der gleichen Weise, wie dies ausführlich im Zusammenhang mit dem Heckscheibenrollo nach Fig. 1 erläutert ist.

Im ausgefahrenen Zustand erstreckt sich die flexible Plane 93 im wesentlichen in einer Ebene, aufgespannt zwischen den beiden Führungsschienen 87 und 88 und über deren Länge. Zum Einfahren wird wie oben beschrieben, der Getriebemotor 21 in Gang gesetzt und er zieht mittels der flexiblen Zahnstangen 95 und 96 den vordersten Spriegel 91, der im ausgefahrenen Zustand der Hecköffnung 89 benachbart ist in eine Lage, in der er der Rücksitzlehne 75 maximal benachbart ist. In dieser Stellung wird die Abdeckplane 93 zwischen den Spriegeln 91 nach unten durchhängend eingefaltet, wie dies in Figur 7 und 8 abschnittsweise zu erkennen ist.

Ein Antriebssystem für roll- oder faltbare Abdeckeinrichtungen 5 von Kraftfahrzeugen ist mit einer Steuerung 31 ausgerüstet. Die Steuerung 31 weist einen Stromsensor 42 auf um den Strom zu erfassen, der von dem Antriebssystem bei der Bewegung der Abdeckeinrichtung 5 aufgenommen wird. Das Steuersystem 31 misst einen Stromparameter zum Beginn der Bewegung der Abdeckeinrichtung 5 und schaltet deren Bewegung ab, sobald ein Abschaltkriterium erreicht ist, das aus den Stromwerten abgeleitet ist, die zum Beginn der Bewegung gemessen wurde.

## Patentansprüche

1. Antriebssystem (21,31) für eine Abdeck- oder Trenneinrichtung (5,71,85) eines Kraftfahrzeugs, die zwischen einer ersten Endlage und einer zweiten Endlage hin- und her bewegbar ist,
mit einem Elektromotor (23) zum gesteuerten Bewegen der Abdeckeinrichtung (5,71,85),
mit einem Stromsensor (42) zum Erfassen des Stroms des Elektromotors (23),
mit einer Steuereinrichtung (31) für den Elektromotor (23), zu der ein erster Eingang (47,48) gehört, in den ein Signal gelangt, das die Steuereinrichtung (31) veranlasst, den Elektromotor (23) im Sinne des Bewegens der Abdeckeinrichtung (5,71,85) in wenigstens eine Richtung in Gang zu setzen, die einen weiteren Eingang (46) aufweist, an den der Stromsensor (42) angeschlossen ist, und die mit einem Ausgang (36) versehen ist, über den der Elektromotor (23) gesteuert wird, wobei die Steuereinrichtung (31) derart gestaltet ist,
dass sie wenigstens einen Stromparameter misst, wenn der Elektromotor (23) zum Verlassen der wenigstens einen Endlage mit Strom versorgt wird,
dass sie den so gemessenen Wert des Stromparameters als Referenzwert speichert,
dass sie ständig den Referenzwert mit später erfassten Werten des Stromparameters vergleicht, und
dass sie den Strom für den Elektromotor (23) abschaltet, wenn zwischen dem aktuell gemessenen Wert für den Stromparameter und dem Referenzwert eine vorgegebene Relativbeziehung erfüllt ist.

2. Antriebssystem nach Anspruch 1, **dadurch gekennzeichnet, dass** die Abdeckeinrichtung (5,71,85) ein Fensterrollo ist.

3. Antriebssystem nach Anspruch 1, **dadurch gekennzeichnet, dass** die Abdeckeinrichtung (5,71,85) eine Laderaumabdeckung ist.

4. Antriebssystem nach Anspruch 1, **dadurch gekennzeichnet, dass** die Abdeckeinrichtung (5,71,85) ein Trenngitter ist, um einen Laderaum (73) von einem Fahrgastraum (72) abzutrennen.

5. Antriebssystem nach Anspruch 1, **dadurch gekennzeichnet, dass** der Elektromotor (23) ein permanenterregter Elektromotor ist.

6. Antriebssystem nach Anspruch 1, **dadurch gekennzeichnet, dass** der Stromsensor (42) von einem ohmschen Widerstand gebildet ist, der in der Stromzuleitung des Elektromotors (23) liegt.

7. Antriebssystem nach Anspruch 1, **dadurch gekennzeichnet, dass** an den ersten Eingang (47,48) ein Schalter/Taster (49,51) angeschlossen ist.

8. Antriebssystem nach Anspruch 1, **dadurch gekennzeichnet, dass** an den ersten Eingang (47,48) ein Sensor angeschlossen ist.

9. Antriebssystem nach Anspruch 1, **dadurch gekennzeichnet, dass** der Stromwert nach einer Tiefpasscharakteristik gefiltert wird.

10. Antriebssystem nach Anspruch 1, **dadurch gekennzeichnet, dass** der Stromreferenzwert ein Wert für eine Stromanstiegsgeschwindigkeit während eines vorgegebenen Zeitfensters ist.

11. Antriebssystem nach Anspruch 10, **dadurch gekennzeichnet, dass** das Zeitfenster mit dem Beginn des Einschaltens des Motorstroms beginnt.

12. Antriebssystem nach Anspruch 10, **dadurch gekennzeichnet, dass** das Zeitfenster nach einer Verzögerungszeit nach dem Beginn des Einschaltens des Motorstroms beginnt.

13. Antriebssystem nach Anspruch 1, **dadurch gekennzeichnet, dass** der Stromparameter der Absolutwert innerhalb einer vorgegebenen Zeitspanne ist.

14. Antriebssystem nach Anspruch 1, **dadurch gekennzeichnet, dass** der Stromparameter ein erster erreichter Scheitelwert ist.

15. Antriebssystem nach Anspruch 1, **dadurch gekennzeichnet, dass** der Stromparameter ein innerhalb eines Zeitfensters erreichter Maximalwert ist, das mit dem Beginn des Einschaltens des Motorstroms beginnt.

16. Antriebssystem nach Anspruch 1, **dadurch gekennzeichnet, dass** der Referenzwert mit einem Korrekturwert versehen wird.

17. Antriebssystem nach Anspruch 1, **dadurch gekennzeichnet, dass** in einem Zeitfenster die in dem Zeitfenster geleistete Arbeit gemessen wird, um zwischen einem leichtgängigen und einem schwergängigen Antriebssystem zu unterscheiden und um daraus einen Korrekturwert für den Referenzwert zu erzeugen.

18. Antriebssystem nach Anspruch 17, **dadurch gekennzeichnet, dass** das Zeitfenster mit dem Beginn des Einschaltens des Motorstroms beginnt.

19. Antriebssystem nach Anspruch 1, **dadurch gekennzeichnet, dass** das Verhältnis zwischen dem ersten Scheitelwert und dem gemitteltem oder dem minimalen Strom gebildet wird und dass daraus ein Korrekturwert für den Referenzwert erzeugt wird.

20. Antriebssystem nach Anspruch 1, **dadurch gekennzeichnet, dass** ein Zeitschlitz festgelegt ist, dessen einer Rand definiert, wann frühestens der Elektromotor wieder Stillgesetzt wird und dessen anderer Rand definiert, wann spätestens der Elektromotor wieder Stillgesetzt wird.

21. Antriebssystem nach Anspruch 1, **dadurch gekennzeichnet, dass** bei Stromunterbrechungen die Zeiten seit dem Beginn des Einschaltens des Stroms für den Elektromotor, in denen der Elektromotor mit Strom versorgt wurde akkumuliert und mit dem Zeitschlitz verglichen wird.

22. Antriebssystem nach Anspruch 1, **dadurch gekennzeichnet, dass** der Referenzwert bei jedem Lauf aktualisiert wird.

23. Antriebssystem nach Anspruch 1, **dadurch gekennzeichnet, dass** der aktuelle Referenzwert durch einen fort-geschriebenen gemittelten Referenzwert gebildet ist.

24. Antriebssystem nach Anspruch 1, **dadurch gekennzeichnet, dass** die Steuerung (31) in räumlicher Nähe zu dem Antriebssystem angeordnet ist.

25. Antriebssystem nach Anspruch 1, **dadurch gekennzeichnet, dass** für den Referenzwert Schranken festgelegt sind.

26. Antriebssystem nach Anspruch 1, **dadurch gekennzeichnet, dass** in einem Speicher über die Historie Buch geführt wird, wobei zu der Historie gehören, die Anzahl der Läufe oder die erreichte Maximalwerte oder die errichten Minimalwerte.
